# DEMANDE DE BREVET EUROPEEN

(11) **EP 0 801 461 A1**
(43) Date de publication de la demande: **15.10.1997**
(21) Numéro de dépôt: 97400788.2
(22) Date de dépôt: 07.04.1997
(51) Int. Cl.: H02M 7/00

(54) **Convertisseur de puissance, module de puissance et module de protection**

(30) Priorité: 12.04.1996 FR 9604603
(71) Demandeur: GEC ALSTHOM TRANSPORT SA, 75116 Paris (FR)
(72) Inventeur: Compagnet, Bernard, 65430 Soues (FR); Scali, Gérard, 65310 Odos (FR); Donnet, Serge, 65000 Tarbes (FR)
(74) Mandataire: Fournier, Michel

(57) **Abrégé**

La présente invention porte sur un convertisseur de puissance (1) comportant une partie puissance et une partie protection, caractérisé en ce que ladite partie puissance constitue un module de puissance (2) et en ce que ladite partie protection constitue un module de protection (3), ledit module de puissance étant déconnectable dudit module de protection.

## Description

La présente invention concerne les convertisseurs de puissance, en général, et porte, plus particulièrement, sur la partie puissance et la partie protection du convertisseur de puissance.

Les convertisseurs de puissance de l'état de la technique sont constitués d'une partie puissance et d'une partie protection.

La partie puissance d'un convertisseur de puissance se compose de dispositifs à semi-conducteurs de puissance.

Cette partie puissance peut également se composer du dispositif de refroidissement et du dispositif d'allumage et de blocage des dispositifs à semi-conducteurs de puissance.

La partie protection d'un convertisseur de puissance se compose d'un circuit de protection comportant des condensateurs.

La partie puissance du convertisseur de puissance est protégée par la partie protection.

Des contraintes électriques, notamment concernant l'inductance parasite entre les dispositifs à semi-conducteurs de puissance, par exemple du type thyristor à extinction commandée par la gâchette (GTO), et le circuit de protection doivent être respectées.

Il est constant pour l'homme du métier que le circuit de protection de la partie puissance du convertisseur de puissance doit se situer géographiquement au plus près des dispositifs à semi-conducteurs de puissance.

Il résulte de ce qui précède que le poids des convertisseurs de puissance de l'état de la technique est élevé, de l'ordre ou supérieur à 80 Kg.

La dépose des convertisseurs de puissance de l'état de la technique s'effectue donc au moyen d'un outillage approprié du fait de leur masse élevée.

Aussi un but de l'invention est-il un convertisseur de puissance ne présentant pas les inconvénients des convertisseurs de puissance de l'état de la technique.

Conformément à l'invention, le convertisseur de puissance comportant une partie puissance et une partie protection se caractérise en ce que ladite partie puissance constitue un module de puissance et en ce que ladite partie protection constitue un module de protection, ledit module de puissance étant déconnectable dudit module de protection.

Le convertisseur de puissance de l'invention satisfait également à l'une au moins des caractéristiques suivantes:
- lesdits modules de puissance et de protection comportent chacun au moins un bus-barre,
- au moins un premier bus-barre relie électriquement entre eux les dispositifs à semi-conducteurs dudit module de puissance,
- au moins un second bus-barre relie électriquement entre eux les condensateurs dudit module de protection,
- lesdits premiers et seconds bus-barres sont susceptibles d'être connectés entre eux.

Conformément à l'invention, la partie puissance d'un convertisseur de puissance se caractérise en ce que ladite partie puissance se présente sous la forme d'un module.

Conformément à l'invention, la partie protection d'un convertisseur de puissance se caractérise en ce que ladite partie protection se présente sous la forme d'un module.

Le module de puissance et le module de protection de l'invention satisfont également à l'une au moins des caractéristiques suivantes:
- les modules comportent chacun au moins un bus-barre,
- au moins un premier bus-barre, respectivement au moins un second bus-barre, relie électriquement entre eux les dispositifs à semi-conducteurs dudit module de puissance, respectivement les condensateurs dudit module de protection,
- lesdits premiers bus-barres, respectivement lesdits seconds bus-barres, sont susceptibles d'être connectés auxdits seconds bus-barres, respectivement auxdits premiers bus-barres.

Un avantage du convertisseur de puissance de l'invention est le gain de masse suffisant apporté à son module de puissance pour permettre une dépose de ce module de puissance par une seule personne sans outillage approprié.

Un autre avantage du convertisseur de puissance de l'invention est que son module de puissance a une masse pouvant être inférieure ou égale à 50 Kg.

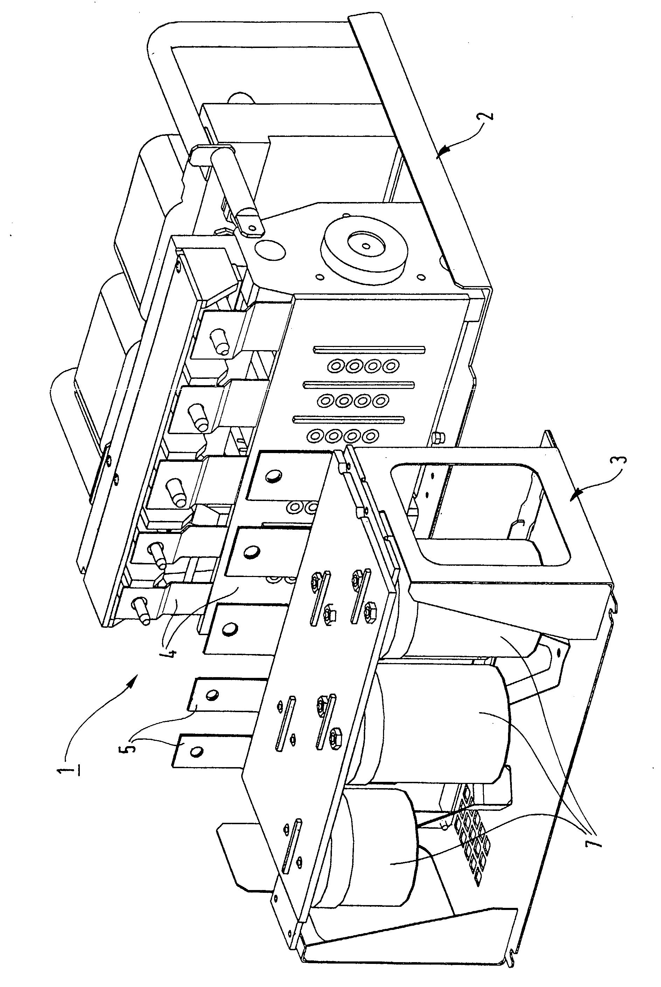

D'autres buts, caractéristiques et avantages de l'invention apparaîtront à la lecture de la description du mode de réalisation préféré du convertisseur de puissance, description faite en liaison avec les dessins dans lesquels:
- la figure unique est une vue générale du convertisseur de puissance conforme à l'invention.

Le convertisseur de puissance 1 comporte une partie puissance et une partie protection.

Conformément à une caractéristique essentielle de l'invention, la partie puissance constitue un module de puissance 2 et la partie protection constitue un module de protection 3.

De plus, le module de puissance 2 est déconnectable du module de protection 3.

Les modules de puissance et de protection comportent chacun au moins un bus-barre 4, 5.

Au moins un premier bus-barre 4 relie électriquement entre eux les dispositifs à semi-conducteurs 6 du module de puissance 2.

Au moins un second bus-barre 5 relie électriquement entre eux les condensateurs 7 du module de protection 3.

Les premiers 4 et seconds 5 bus-barres sont susceptibles d'être connectés entre eux.

La présente invention porte également sur la partie puissance du convertisseur de puissance laquelle se présente sous la forme d'un module.

La présente invention porte également sur la partie protection d'un convertisseur de puissance laquelle se présente également sous la forme d'un module.

Le module de puissance 2 et le module de protection 3 comportent chacun au moins un bus-barre 4, 5.

Concernant le module de puissance 2 au moins un premier bus-barre 4 relie électriquement entre eux les dispositifs à semi-conducteurs 6 du module de puissance.

Concernant le module de protection 3 au moins un second bus-barre 5 relie électriquement entre eux les condensateurs 7 du module de protection.

Comme indiqué précédemment, les premiers 4 et seconds 5 bus-barres sont susceptibles d'être connectés entre eux.

## Revendications

1. Convertisseur de puissance (1) comportant une partie puissance et une partie protection, caractérisé en ce que ladite partie puissance constitue un module de puissance (2) et en ce que ladite partie protection constitue un module de protection (3), ledit module de puissance (2) étant déconnectable dudit module de protection (3).

2. Convertisseur selon la revendication 1, dans lequel lesdits modules de puissance et de protection comportent chacun au moins un bus-barre (4, 5).

3. Convertisseur selon la revendication 2, dans lequel au moins un premier bus-barre (4) relie électriquement entre eux les dispositifs à semi-conducteurs (6) dudit module de puissance (2).

4. Convertisseur selon la revendication 2, dans lequel au moins un second bus-barre (5) relie électriquement entre eux les condensateurs (7) dudit module de protection (3).

5. Convertisseur selon l'une quelconque des revendications 2 à 4, dans lequel lesdits premiers (4) et seconds (5) bus-barres sont susceptibles d'être connectés entre eux.

6. Partie puissance d'un convertisseur de puissance, caractérisée en ce que ladite partie puissance se présente sous la forme d'un module.

7. Partie protection d'un convertisseur de puissance, caractérisée en ce que ladite partie protection se présente sous la forme d'un module.

8. Module de puissance et module de protection selon, respectivement, les revendications 6 et 7 lesquels comportent chacun au moins un bus-barre.

9. Module de puissance, respectivement module de protection, selon la revendication 8, dans lequel au moins un premier bus-barre, respectivement au moins un second bus-barre, relie électriquement entre eux les dispositifs à semi-conducteurs dudit module de puissance, respectivement les condensateurs dudit module de protection.

10. Module de puissance, respectivement module de protection, selon l'une quelconque des revendications 8 et 9, dans lequel lesdits premiers bus-barres, respectivement lesdits seconds bus-barres, sont susceptibles d'être connectés auxdits seconds bus-barres, respectivement auxdits premiers bus-barres.
